# EUROPÄISCHE PATENTANMELDUNG

(11) **EP 2 184 097 A1**
(43) Veröffentlichungstag der Anmeldung: **12.05.2010**
(21) Anmeldenummer: 09173711.4
(22) Anmeldetag: 22.10.2009
(51) Int. Cl.: B01F 3/04, B01F 5/04, B01F 15/00, A01G 25/00, A01C 23/04

(54) **Verfahren und Vorrichtung zur Sauerstoffanreicherung von Gießwasser**

(30) Priorität: 06.11.2008 DE 102008056232
(71) Anmelder: Messer Austria GmbH, 2352 Gumpoldskirchen (AT)
(72) Erfinder: Bauer, Peter, 2551 Enzesfeld (AT)
(74) Vertreter: Münzel, Joachim R.

(57) **Zusammenfassung**

Betreffend ein für Gärtnereien geeignetes Verfahren zum Eintragen von Sauerstoff wird vorgeschlagen, Sauerstoff aus einer Sauerstoffquelle (13), z.B. einem Sauerstofftank oder einem Flaschenbündel mittels einer Injektionseinrichtung (11), beispielsweise einer Venturidüse oder einer Ultraschalldüse, in eine Gießwasser führende Leitung (5) einzubringen. Dadurch wird eine gleichmäßig hohe Sauerstoffkonzentration im Gießwasser erreicht. Die damit gegossenen Pflanzen sind wesentlich widerstandsfähiger gegen Pilzerkrankungen und weisen ein beschleunigtes Wachstum auf.

## Beschreibung

Die Erfindung betrifft ein Verfahren sowie eine Vorrichtung zur Sauerstoffanreicherung von Gießwasser.

Bei der Behandlung von Nähr-, Nutz- und Zierpflanzen in Gärtnereien, insbesondere von in Freibeeten oder Gewächshäusern gehaltenen Pflanzen, sind verschiedene Methoden bekannt, um das Wachstum zu intensivieren und um im Nährboden die Ausbreitung von Bakterienstämmen, die anaerobe Giftstoffe, wie beispielsweise H₂S oder CH₄ produzieren, zu unterdrücken.

Die klassischen Intensivzuchtmethoden bedienen sich dabei einer äußeren Zufuhr physiologisch wichtiger Elemente, wie Sauerstoff, Stickstoff und Phosphor in Form anorganischer Donatoren wie z.B. Nitraten, Ammoniumsalzen oder Phosphaten. Diese Zuführung ist vor allem dadurch begründet, dass Sauerstoff im Nährboden nur begrenzt verfügbar ist und infolgedessen auch Nährstoffe, die aus dem Bodenmaterial durch aerobe Bakterien metabolisch freigesetzt werden, den Pflanzen nicht im erwünschten Umfang zur Verfügung stehen.

Die Zugabe der genannten anorganischen Donatoren ist nicht unproblematisch. So kann beispielsweise die Nitrierung bei unsachgemäßer Anwendung zu einer Anreicherung von Nitrat oder Nitrit in der Pflanzensubstanz führen, die humanphysiologisch bedenkliche Werte annehmen kann. Außerdem können durch Überdüngung Nitrate und Phosphate in Grund- und Oberflächengewässer gelangen und in der Folge zu Umweltbelastungen und zur Kontamination von Trinkwasser führen.

Um diese Nachteile zu überwinden wurde bereits vorgeschlagen, den Sauerstoff in gasförmigem Zustand den Pflanzen zuzuführen. Dem liegt die Erkenntnis zugrunde, dass Sauerstoff im Stoffwechsel höherer Pflanzen zur Oxidation diverser hydrierter Coenzyme im Rahmen ihrer Atmungskette benötigt wird. Hierbei bestand bislang die Vorstellung, dass im Boden die Anwesenheit freien Sauerstoffs erforderlich ist.

So wird beispielsweise in der EP 0 356 747 A2 ein Verfahren und eine Vorrichtung zur Intensivaufzucht von Pflanzen vorgeschlagen, bei dem gasförmiger Sauerstoff über ein geeignetes Injektionssystem in den Nährboden eingetragen wird. Das Injektionssystem umfasst dabei eine Gaseintragsvorrichtung, beispielsweise in Form eines perforierten Schlauchs, die 5 bis 40 cm unterhalb der Wurzelunterkanten der Pflanzen angebracht wird, und über den kontinuierlich oder in regelmäßigen Zeitintervallen reiner Sauerstoff eingebracht wird.

In der EP 0 229 505 A1 wird ein System zum Zuführen von gasförmigem Sauerstoff an die Pflanzenwurzeln vorgeschlagen, bei dem die Menge an zugeführtem Sauerstoff in Abhängigkeit von der Sonneneinstrahlung geregelt wird. Hintergrund ist die Vorstellung, dass die von aeroben Mikroorganismen freigesetzten Nährstoffe bei intensiver Sonneneinstrahlung stärker von den Pflanzen in Anspruch genommen werden als dies bei geringer Einstrahlung der Fall ist.

Aus der DE 299 21 942 U1 ist ein untererdiges Bewässerungs- und Belüftungssystem bekannt, bei der eine unterhalb des Wurzelbereiches angeordnete Eintragsvorrichtung, die beispielsweise aus perforierten Rohrstücken besteht, mit Anschlussstutzen für verschiedene Medien ausgerüstet ist. Dadurch kann das Eintragssystem sowohl zur Zuführung von Gießwasser, als auch zur Zuführung von gasförmigen Medien, wie Sauerstoff oder Luft, eingesetzt werden.

Der Nachteil der zuvor beschriebenen Systeme ist, dass ein erheblicher Anteil des Sauerstoffs durch den Nährboden an die Oberfläche gelangt und ungenutzt in die Au ßenatmosphäre entweicht.

Weiterhin ist aus der DE 39 26 075 A1 eine für die Bodensanierung bestimmte Anordnung bekannt, bei der in einem Druckbehälter Wasser mit Sauerstoff übersättigt wird und die übersättigte Lösung in den Bodenbereich unterhalb des Grundwassers eingetragen wird. Man hofft, auf diese Weise eine simultane Sauerstoffversorgung wassergesättigter und -ungesättigter Bodenzonen zu erreichen. Für die Förderung des Wachstums von Pflanzen in Gärtnereien ist dieses Verfahren jedoch weder geeignet noch vorgesehen.

Aufgabe der vorliegenden Erfindung ist also, eine System zum Eintragen von Sauerstoff und anderer, das Pflanzenwachstum begünstigender Gase in den Nährboden einer Pflanzenkultur zu schaffen, bei dem ein effizienter Eintrag des Sauerstoffs erfolgt und das insbesondere für den Einsatz in Gärtnereien geeignet ist.

Gelöst ist diese Aufgabe durch ein Verfahren zur Sauerstoffanreicherung von Gießwasser, bei dem das Gießwasser in einer Leitung herangeführt und Sauerstoff aus einer Sauerstoffquelle an einem in der Leitung angeordneten Injektor in das Gießwasser eingetragen wird.

Erfindungsgemäß wird Sauerstoff mit einer Reinheit von über 90 Vol.-%, bevorzugt über 99 Vol.-% mit hohem Druck mittels einer geeigneten Injektionseinrichtung in das in der Leitung gleichfalls unter Druck stehende Gießwasser eingetragen. Die Injektion des Sauerstoffs in die das Gießwasser führende Leitung führt zu einer guten Einlösung des Sauerstoffs in das Gießwasser und zu einer gleichmäßigen Verteilung des Sauerstoffs im gesamten Gießwasser. Der Sauerstoff kann dabei kontinuierlich oder in Form aufeinander abfolgender Pulse in das Gießwasser eingetragen werden. Durch den erhöhten Sauerstoffanteil werden die Pflanzen erheblich widerstandsfähiger gegen Schädlinge und Pilzbefall, der Einsatz von Pestiziden und Fungiziden kann deutlich reduziert werden. Zudem wird das Wurzelwachstum angeregt und die Pflanzen weisen eine verlängerte Lebensdauer auf.

Bevorzugt wird das Gießwasser derart mit Sauerstoff angereichert, dass das Gießwasser nach der Anreicherung mit Sauerstoff einen Sauerstoffanteil von mindestens 15 mg/l, besonders bevorzugt einen Sauerstoffanteil zwischen 30 und 45 mg/l aufweist. Es hat sich überraschend gezeigt, dass bereits eine solche, im Vergleich zum natürlichen Sauerstoffanteil im Gießwasser von ca. 6 bis 10 mg/l bei einer Temperatur von ca. 20°C eher geringfügige Anreicherung zu einer erheblichen Steigerung der metabolischen Aktivität aerober Mikroorganismen und damit zur verstärkten Freisetzung wertvoller Nährstoffe aus dem Nährboden führt. Zugleich wird die Aktivität anaerober Stämme im Nährboden unterdrückt.

Die Aufgabe der Erfindung wird auch mit einer Vorrichtung zur Sauerstoffanreicherung von Gießwasser gelöst, die mit einer Leitung zum Zuführen von Gießwasser und mit einem in der Leitung angeordneten und mit einer Sauerstoffquelle strömungsverbundenen Injektionseinrichtung für Sauerstoff ausgerüstet ist. Durch die Anordnung einer Injektordüse in der Leitung des Gießwassers wird eine sehr effektive Einlösung von Stoff und/oder anderen gasförmigen, wasserlöslichen und für das Pflanzenwachstum förderlichen Medien ermöglicht.

Als bevorzugte Injektionseinrichtung eignet sich eine Venturidüse, bei der Sauerstoff aufgrund der starken Strömung des in der Leitung fließenden Gießwassers in das Gießwasser eingesogen wird und somit eine besonders gute Durchmischung und Verteilung des Sauerstoffs im Gießwasser erfolgt. Eine ebenfalls vorteilhafte Injektionseinrichtung ist eine Injektordüse, vorzugsweise eine Ultraschalldüse, bei der der Sauerstoff mit hohem Druck und hoher Geschwindigkeit, insbesondere mit Überschallgeschwindigkeit, in das Gießwasser eingetragen wird.

In einer besonders zweckmäßigen Ausgestaltung der Erfindung ist der Injektionseinrichtung eine Mischeinrichtung zum gleichmäßigen Verteilen des Sauerstoffs im Gießwasser nachgeschaltet. Als Mischer kommt dabei ein statischer oder ein dynamischer Mischer, beispielsweise ein Rührwerk, in Betracht.

Eine vorteilhafte Weiterbildung der Erfindung sieht vor, dass eine mit der Injektionseinrichtung wirkverbundene Regeleinheit vorgesehen ist, die den Eintrag von Sauerstoff in das Gießwasser in Abhängigkeit von vorgegebenen Sollwerten oder von gemessenen Parametern regelt. Auf diese Weise kann beispielsweise der Sauerstoffanteil auf einen bestimmten Wert gebracht oder gehalten werden, oder er kann, beispielsweise in Abhängigkeit von der Reife der Pflanzen, der Tageszeit oder der Sonneneinstrahlung, laufend variiert werden.

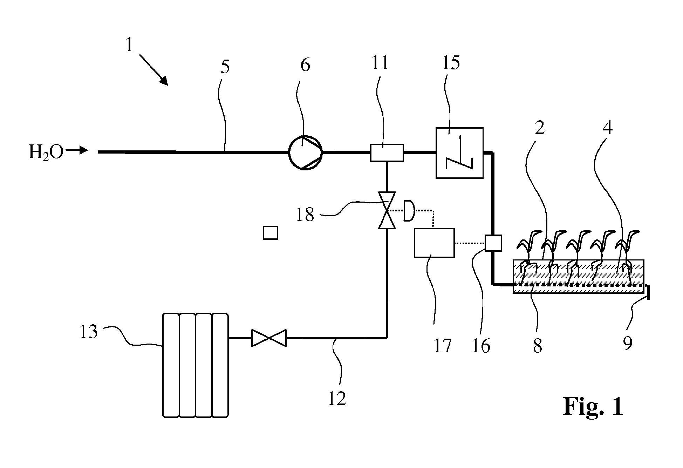

Anhand der Zeichnung soll ein Ausführungsbeispiel der Erfindung näher erläutert werden. In schematischer Ansicht zeigt die einzige Zeichnung (Fig. 1) eine Anordnung zum Bewässern von Pflanzen mit sauerstoffangereichertem Gießwasser.

Die in der Zeichnung gezeigte Anordnung 1 dient zum Bewässern eines Pflanzenbeets 2 mittels einer Bewässerungsanlage, bei der das Gießwasser unmittelbar dem Wurzelbereich im Boden 3 zugeführt wird. Anstelle einer solcher Bewässerungsanlage können jedoch auch andere Bewässerungseinrichtungen auf die im Folgenden beschriebenen Weise mit sauerstoffreichem Wasser versorgt werden, beispielsweise eine Beregnungsanlage einer Tropfbewässerung. Das Pflanzenbeet 2 befindet sich beispielsweise in einem Gewächshaus einer Gärtnerei. Das zur Bewässerung benötigte Gießwasser gelangt aus einer hier nicht gezeigten Quelle, beispielsweise einem Brunnen oder einem Wasserspeicher, über eine Leitung 5 mittels einer Pumpe 6 zu einem im Pflanzenbeet 2 angeordneten Wasserverteiler 8. Überschüssiges, also von dem Pflanzen bzw. dem Boden im Pflanzenbeet 2 nicht aufgenommenes Gießwasser wird anschließend über eine Ableitung 9 abgeführt.

Zur Anreicherung des Gießwassers mit Sauerstoff ist in der Leitung 5, stromab zur Pumpe 6, ein Sauerstoffinjektor 11 vorgesehen. Beim Sauerstoffinjektor 11 handelt es sich beispielsweise um eine Ultraschalldüse, mittels deren Sauerstoff mit Überschallgeschwindigkeit in das in der Leitung 5 geführte Gießwasser eingetragen werden kann, wodurch eine gute Durchmischung und rasche Einlösung des Sauerstoffs im Gießwasser erfolgt. Im Rahmen der Erfindung können jedoch auch andere Eintragsysteme zum Einsatz kommen, beispielsweise eine Venturidüse. Die Zudosierung des Sauerstoffs erfolgt kontinuierlich oder in aufeinanderfolgenden Pulsen. Der Sauerstoffinjektor 11 ist über eine Sauerstoffleitung 12 mit einer Sauerstoffquelle 13 verbunden, beispielsweise einem Flaschenbündel oder einem Sauerstofftank. Der Sauerstoff sollte eine Reinheit von über 90 Vol.-%, besonders bevorzugt über 99 Vol.-% (technischer Sauerstoff) aufweisen. Bei der Anreicherung wird das Gießwasser beispielsweise derart mit Sauerstoff angereichert, dass im Gießwasser während der gesamten Lebensdauer der Pflanze zwischen 15 mg/l bis 45 mg/l, bevorzugt zwischen 30 mg/l und 45 mg/l Sauerstoff enthalten ist; jedoch können auch - abhängig von der Pflanzensorte, der Umgebungstemperatur (beispielsweise der Temperatur im Gewächshaus) oder vom Wachstumsstand der Pflanzen andere oder im Laufe des Pflanzenwachstums unterschiedliche Sauerstoffmengen eingetragen werden. Über den Injektor 11 können auch andere im Wasser lösliche Gase eingetragen werden, die für das Pflanzenwachstum förderlich sind.

Stromab zum Sauerstoffinjektor 11 ist im Ausführungsbeispiel eine zusätzliche Mischeinrichtung 15 vorgesehen, um eine homogene Verteilung des sauerstoffangereicherten Gießwassers im gesamten Gießwasser zu erzielen. Eine solche zusätzliche Mischeinrichtung ist im Rahmen der Erfindung jedoch nicht zwingend erforderlich.

Um die Menge des eingetragenen Sauerstoffs zu regeln, ist in der Leitung 5, stromab zum Sauerstoffinjektor 11 bzw. der Mischeinrichtung 15, eine Sonde 16 angeordnet, mittels der der Sauerstoffgehalt im angereicherten Gießwasser gemessen werden kann. Die an der Sonde 16 gemessenen Werte werden einer Regeleinrichtung 17 zugeleitet, die in Abhängigkeit eines vorgegebenen Regelprogramms die Zufuhr von Sauerstoff durch die Sauerstoffleitung 12 an einem Ventil 18 steuert. So kann der zugeführte Sauerstoffgehalt beispielsweise tageszeitlich variieren oder in Abhängigkeit vom Wuchs oder dem Reifegrad der Pflanzen im Pflanzenbeet 2, der Umgebungstemperatur oder der Sonneneinstrahlung geregelt werden.

Die Bewässerung der Pflanzen im Pflanzenbeet 2 mit sauerstoffangereichertem Wasser mittels der Anordnung 1 führt zu einer erheblich verbesserten Widerstandsfähigkeit der Pflanzen. Insbesondere kann dadurch der Einsatz von Pestiziden und Fungiziden auch bei hohen Temperaturen im Gewächshaus erheblich reduziert werden. Das angereicherte Gießwasser führt zu einer verbesserten Wurzelbildung und fallweise sogar zu einer längeren Lebensdauer und damit einem höheren Ertrag der Pflanzen.

### Bezugszeichenliste:

- 1.: Anordnung
- 2.: Pflanzenbeets
- 3.: Boden
- 4.: -
- 5.: Leitung
- 6.: Pumpe
- 7.: -
- 8.: Wasserverteiler
- 9.: Ableitung
- 10.: -
- 11.: Sauerstoffinjektor
- 12.: Sauerstoffleitung
- 13.: Sauerstoffquelle
- 14.: -
- 15.: Mischeinrichtung
- 16.: Sonde
- 17.: Regeleinheit
- 18.: Ventil

## Patentansprüche

1. Verfahren zur Sauerstoffanreicherung von Gießwasser, bei dem das Gießwasser in einer Leitung (5) herangeführt wird Sauerstoff aus einer Sauerstoffquelle (13) an einem in der Leitung (5) angeordneten Injektor (11) in das Gießwasser eingetragen wird.

2. Verfahren nach Anspruch 1, **dadurch gekennzeichnet, dass** das Gießwasser nach der Anreicherung mit Sauerstoff einen Sauerstoffanteil von mindestens 15 mg/l aufweist.

3. Verfahren nach Anspruch 1, **dadurch gekennzeichnet, dass** das Gießwasser nach der Anreicherung mit Sauerstoff einen Sauerstoffanteil von 30 bis 45 mg/l aufweist.

4. Vorrichtung zur Sauerstoffanreicherung von Gießwasser, mit einer Leitung (5) zum Zuführen von Gießwasser und mit einer in der Leitung angeordneten und mit einer Sauerstoffquelle (13) strömungsverbundenen Injektionseinrichtung (11) für Sauerstoff.

5. Vorrichtung nach Anspruch 4, **dadurch gekennzeichnet, dass** als Injektionseinrichtung (11) eine Venturidüse, vorgesehen ist.

6. Vorrichtung nach Anspruch 4, **dadurch gekennzeichnet, dass** als Injektionseinrichtung (11) eine Injektordüse, vorzugsweise eine Ultraschalldüse, vorgesehen ist.

7. Vorrichtung nach einem der Ansprüche 4 bis 6, **dadurch gekennzeichnet, dass** der Injektionseinrichtung (11) eine Mischeinrichtung (15) zum gleichmäßigen Verteilen des Sauerstoffs im Gießwasser nachgeschaltet ist.

8. Vorrichtung nach einem der Ansprüche 4 bis 7, **dadurch gekennzeichnet, dass** eine mit der Injektionseinrichtung (11) wirkverbundene Regeleinheit (17) vorgesehen ist, die den Eintrag von Sauerstoff in das Gießwasser in Abhängigkeit von vorgegebenen Sollwerten oder von gemessenen Parametern regelt.
